# FASCICULE DE BREVET EUROPEEN

(11) **EP 2 892 758 B1**
(45) Date de publication et mention de la délivrance du brevet: **30.11.2022**
(21) Numéro de dépôt: 13758861.2
(22) Date de dépôt: 05.09.2013
(51) Int. Cl.: B60Q 1/14

(54) **PROCÉDÉ DE COMMANDE D'UN SYSTÈME D'ÉCLAIRAGE ADAPTATIF**
VERFAHREN ZUR STEUERUNG EINES ADAPTIVEN BELEUCHTUNGSSYSTEMS
METHOD FOR CONTROLLING AN ADAPTIVE LIGHTING SYSTEM

(30) Priorité: 07.09.2012 FR 1258419
(43) Date de publication de la demande: 15.07.2015
(73) Titulaire: Valeo Vision, 93012 Bobigny Cedex (FR)
(72) Inventeur: ALBOU, Pierre, F-75013 Paris (FR); SANCHEZ, Vanesa, F-75011 Paris (FR); BA, Sidy, 77550 Moissy Cramayel (FR); EDEY, Guy, F-94100 Saint-Maur-des-Fosses (FR)
(74) Mandataire: Valeo Visibility
(86) Numéro de dépôt international: PCT/EP2013/068358
(87) Numéro de publication internationale: WO 2014/037435

(56) Documents cités:
- DE-A1-102007 040 042
- DE-A1-102008 025 807
- FR-A1- 2 970 686
- US-A1- 2003 137 849
- US-A1- 2009 254 247

## Description

Le secteur technique de la présente invention est celui des procédés de commande de dispositif ou moyen d'éclairage et/ou de signalisation pour véhicule automobile.

Il existe un besoin, dans le domaine de l'automobile, de pouvoir illuminer la route empruntée par un véhicule en un "mode éclairage route partiel", à savoir générer dans un faisceau route une ou plusieurs fenêtres sombres correspondant aux endroits où sont présents des véhicules venant en sens inverse ou des véhicules circulant dans le même sens, de manière à éviter l'éblouissement des occupants de ces véhicules, tout en éclairant la route dans sa plus grande surface. Une telle fonction est appelée ADB (Adaptive Driving Beam, en anglais).

Le document FR2970686A1 divulgue un système ADB qui génère une réduction de luminosité localement dans un faisceau lumineux, à l'endroit d'un objet détecté.

Un tel système présente plusieurs inconvénients. En premier lieu, la réduction de luminosité opérée par ce système est difficile à contrôler en raison du fait que cette réduction de luminosité doit respecter une norme réglementaire qui garantit une absence d'éblouissement. On comprend ici qu'il est difficile de garantir un niveau de sécurité optimal et fiable.

En outre, cette réduction de luminosité fait appel à des moyens électroniques supplémentaires, qui représentent un coût non négligeable de la fonction ADB.

Enfin, le système divulgué dans le document cité ci-dessus mérite d'être amélioré. Bien qu'il s'agisse d'une réduction de luminosité, la visibilité du conducteur du véhicule équipé de la fonction ADB dans la zone de réduction de luminosité est néanmoins affectée, comparativement à un éclairage maximum et homogène du faisceau lumineux. Il convient donc de maintenir cet éclairage maximum et homogène le plus longtemps possible, sans pour autant risquer d'éblouir les autres usagers. Or, la réduction de luminosité est opérée dès qu'un objet entre dans un champ délimité, sans néanmoins vérifier si l'objet est effectivement en situation d'éblouissement. Bien qu'étant dans ce champ, un objet n'est pas nécessairement ébloui, notamment quand celui-ci est particulièrement éloigné du véhicule porteur de la fonction ADB.

Le document DE 10 2007 040042 A1 divulgue un autre type de système et procédé anti-éblouissement.

Le but de la présente invention est donc de résoudre les inconvénients décrits ci-dessus et vient améliorer l'étape décisionnelle de création d'une zone d'ombre. En plus de la détection opérée selon le système de l'art antérieur, le procédé selon l'invention évalue le niveau d'éblouissement de l'objet et utilise ce critère pour décider ou non de créer une zone d'ombre dans le faisceau au droit de l'objet détecté.

L'objet de l'invention est ainsi un procédé de commande d'un système d'éclairage pour véhicule comprenant une pluralité de sources lumineuses génératrices d'un faisceau lumineux, le procédé comprenant les caractéristiques de la revendication 1.

L'invention fixe ainsi un seuil d'intensité lumineuse nécessairement supérieure à zéro, adapté en fonction du sens de circulation de l'objet comparé au véhicule, en fonction de la position angulaire de cet objet ou de la distance qui sépare l'objet du véhicule, ou encore une combinaison de ces deux derniers paramètres. On garantit ainsi au conducteur du véhicule un éclairage maximum le plus longtemps possible, sans pour autant éblouir les autres usagers de la route.

On entend par objet détecté une zone de l'espace caractéristique d'un véhicule, cette zone contenant au moins les positions des yeux des conducteurs de ces véhicules, ainsi que les positions des rétroviseurs latéraux de ces véhicules.

On entend par « au niveau de l'espace », le fait qu'en au moins un point de cet espace, l'intensité lumineuse engendrée par la source soit supérieure au seuil d'intensité lumineuse.

Le procédé selon l'invention s'applique à un système d'éclairage comportant au moins deux projecteurs, le procédé étant avantageusement caractérisé par le fait que la zone d'ombre est déterminée indépendamment pour chaque projecteur, l'un des projecteurs étant considéré éteint pour la détermination de la zone d'ombre créée par l'autre projecteur.

Selon un exemple de l'invention, le seuil d'intensité lumineuse est déterminé en fonction d'une position angulaire de l'objet par rapport à un axe de déplacement du véhicule, du sens de déplacement de l'objet par rapport au véhicule et de sa distance par rapport au véhicule. Le seuil peut ainsi être déterminé par la combinaison de ces trois paramètres.

Le seuil d'intensité lumineuse peut aussi être choisi parmi au moins deux seuils distincts en fonction de la détermination du sens de déplacement de l'objet par rapport au véhicule.

Selon un exemple d'application du procédé, le seuil d'intensité lumineuse est choisi parmi au moins trois ou quatre seuils distincts, lorsqu'il est déterminé que l'objet se déplace en sens inverse du véhicule, chaque seuil étant déterminé en comparant au moins la position angulaire de l'objet à une plage angulaire prédéterminée.

En complément de la solution ci-dessus, chaque seuil peut être déterminé en comparant la distance qui sépare l'objet du véhicule à une plage de distances prédéterminée.

Un premier seuil d'intensité lumineuse est déterminé lorsque la position angulaire de l'objet est supérieure ou égale à 2°, par rapport à un axe de déplacement du véhicule, et notamment comprise entre 2° et 4,8° par rapport à l'axe de déplacement du véhicule. Cette situation vise un objet qui croise le véhicule et qui est proche de celui-ci.

Dans un tel cas, le premier seuil d'intensité lumineuse est inférieur ou égal à 625 candelas, mais nécessairement supérieur à zéro, comme évoqué plus haut.

Un deuxième seuil d'intensité lumineuse est déterminé lorsque la position angulaire de l'objet est supérieure ou égale à 1° et strictement inférieure à 2° par rapport à l'axe de déplacement du véhicule. Cette situation vise un objet qui croise le véhicule et qui est à distance intermédiaire de celui-ci.

Dans une telle situation, le deuxième seuil d'intensité lumineuse est supérieur à 625 candelas et inférieur ou égal à 1750 candelas.

Un troisième seuil d'intensité lumineuse est déterminé lorsque la position angulaire de l'objet est supérieure ou égale à 0,5° et strictement inférieure à 1°, mesuré par rapport à l'axe de déplacement du véhicule. Cette situation vise un objet qui croise le véhicule et qui est éloigné de celui-ci.

Dans un tel cas, le troisième seuil d'intensité est supérieur à 1750 candelas et inférieur ou égal à 5450 candelas.

Un quatrième seuil d'intensité lumineuse est déterminé lorsque la position angulaire de l'objet est strictement supérieure à 4,8° ou strictement inférieure à 0,5°, par rapport à l'axe de déplacement du véhicule. Il s'agit d'un cas par défaut où, soit l'objet est particulièrement éloigné du véhicule, soit l'objet est sensiblement à côté du véhicule et donc sur le point d'être croisé.

Dans une telle situation, le quatrième seuil d'intensité est supérieur ou égal à 5450 candelas.

Selon un autre mode de réalisation alternatif ou complémentaire de l'invention, le seuil d'intensité lumineuse est choisi parmi au moins deux seuils, lorsqu'il est déterminé que l'objet se déplace dans un même sens que le véhicule, chaque seuil étant déterminé en comparant au moins la distance séparant l'objet du véhicule à une distance prédéterminée, cette dernière pouvant par exemple être une valeur fixe ou une plage de distances.

De manière complémentaire à la solution présentée ci-dessus, chaque seuil est déterminé en comparant la position angulaire de l'objet à une plage angulaire prédéterminée. En combinant la distance et la position angulaire de l'objet, on affine la détermination du seuil, et donc le moment où la zone d'ombre doit être générée.

Un cinquième seuil d'intensité lumineuse est déterminé lorsque la distance de l'objet au véhicule est inférieure ou égale à 50 mètres.

La détermination de ce cinquième seuil peut être affinée en prenant en compte la position angulaire de l'objet par rapport à l'axe de déplacement du véhicule, cette position angulaire étant supérieure à +0.9 ou -0.9°, de part et d'autre de l'axe de déplacement du véhicule.

Dans l'un ou l'autre des deux cas ci-dessus, le cinquième seuil d'intensité est inférieur ou égal à 1850 candelas, mais nécessairement supérieur à zéro.

Un sixième seuil d'intensité lumineuse est déterminé lorsque la distance de l'objet au véhicule est strictement supérieure à 50 mètres et inférieure ou égale à 100 mètres.

Ce sixième seuil d'intensité peut encore être affiné lorsqu'il est déterminé que la position angulaire de l'objet est comprise entre +0.45° et +0.9° ou comprise entre -0.45° et -0.9°, par rapport à l'axe de déplacement du véhicule.

Dans l'un ou l'autre des deux cas ci-dessus, le sixième seuil d'intensité est strictement supérieur à 1850 candelas et inférieur ou égal à 5300 candelas.

Un septième seuil d'intensité lumineuse est déterminé lorsque la distance de l'objet au véhicule est strictement supérieure à 100 mètres et inférieure ou égale à 200 mètres.

Ce septième seuil d'intensité est rendu plus sévère lorsqu'il est déterminé que la position angulaire de l'objet est comprise entre +0.45° et -0.45°, par rapport à un axe de déplacement du véhicule.

Dans l'un ou l'autre des deux cas ci-dessus, le septième seuil d'intensité est strictement supérieur à 5300 candelas et inférieur à 16000 candelas.

Un huitième seuil d'intensité lumineuse est déterminé lorsque la distance de l'objet au véhicule est supérieure à 200 mètres. Dans ce cas, le huitième seuil d'intensité est supérieur ou égal à 16000 candelas.

Le procédé peut comprendre une étape de sélection d'un seuil d'intensité lumineuse lorsque l'étape de détection détecte deux objets caractéristiques d'au moins deux véhicules présentant des sens de déplacement opposés, l'étape de sélection imposant le seuil d'intensité lumineuse le plus faible des seuils d'intensité lumineuse qui dépendent de la pluralité de véhicules détectés.

Un tout premier avantage selon l'invention réside dans l'amélioration du niveau de sécurité de la fonction ADB, d'une part en maintenant un éclairage maximum au bénéfice du conducteur du véhicule bien qu'un objet soit détecté, et d'autre part en générant une extinction totale du faisceau lumineux dans la zone où cet objet a été détecté, lorsqu'il est déterminé que l'objet atteint un niveau d'éblouissement critique.

Un autre avantage réside dans la réduction des moyens techniques utilisés pour la mise en œuvre de la fonction ADB.

D'autres caractéristiques, détails et avantages de l'invention ressortiront plus clairement à la lecture de la description donnée ci-après à titre indicatif en relation avec des dessins dans lesquels :
- la figure 1 illustre de façon schématique, en vue de dessus, un exemple de faisceau obtenu selon le procédé conforme à l'invention,
- la figure 2 est une vue schématique, en vue de dessus, d'un exemple de faisceau réalisé selon le procédé de l'invention, dans lequel une zone d'ombre est ménagée,
- la figure 3 illustre de façon schématique, en vue de dessus, un exemple de paramètres de détection d'un objet venant en sens inverse du véhicule mettant en œuvre le procédé selon l'invention,
- la figure 4 montre de façon schématique, en vue de dessus, un exemple de paramètres de détection d'une pluralité d'objets venant en sens inverse du véhicule mettant en œuvre un procédé non conforme à l'invention,
- la figure 5 illustre de façon schématique, en vue de dessus, un exemple de paramètres de détection d'un objet circulant dans un même sens que le véhicule mettant en œuvre le procédé selon l'invention,
- la figure 6 est un graphe illustrant des exemples de détection angulaire et/ou de distance d'un objet venant en sens inverse du véhicule mettant en œuvre le procédé selon l'invention,
- la figure 7 est un graphe montrant des exemples de détection angulaire et/ou de distance d'un objet circulant dans un même sens que le véhicule mettant en œuvrele procédé selon l'invention.

Il faut noter que les figures exposent l'invention de manière détaillée pour mettre en œuvre l'invention, lesdites figures pouvant bien entendu servir à mieux définir l'invention le cas échéant.

L'invention concerne tout d'abord un procédé de contrôle d'un faisceau lumineux émis par un véhicule, notamment automobile. Un tel contrôle intervient en pilotant l'allumage et/ou l'extinction d'un système d'éclairage qui équipe le véhicule.

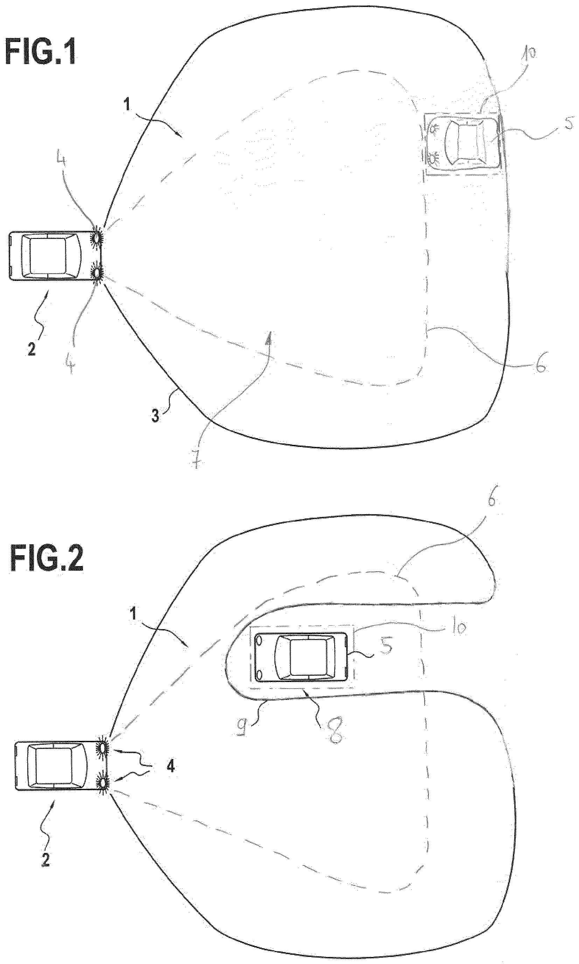

Comme illustré à la figure 1, selon le procédé conforme à l'invention, on contrôle un faisceau lumineux 1 d'un véhicule 2, un tel faisceau lumineux étant délimité par un contour 3. Ce faisceau lumineux 1 est créé, par exemple, au moyen de deux optiques 4, autrement appelés projecteur, installés en face avant du véhicule 2. Le faisceau lumineux 1 est ainsi généré par une pluralité de sources lumineuses, par exemple entre trois et cinq sources lumineuses montées dans chaque projecteur du véhicule.

Le procédé selon l'invention comprend tout d'abord une étape de détection d'un objet 5, ce dernier étant repéré, c'est-à-dire détecté par le véhicule dès lors que l'objet pénètre dans le faisceau lumineux 1 délimité par le contour 3.

Le procédé détermine également un seuil d'intensité lumineuse 6 qui délimite un champ 7, le seuil étant ici matérialisé par un trait interrompu. En l'absence de création d'une zone d'ombre, on considère qu'un objet situé à l'intérieur du champ 7 subirait un éblouissement dépassant la norme réglementaire. En revanche, une bande du faisceau lumineux qui s'étend entre le contour 3 et le seuil d'intensité lumineuse 6 peut en certaines circonstances être considérée comme non-éblouissante. C'est la raison pour laquelle, bien que l'objet 5 soit situé dans le faisceau lumineux 1, il n'est pas généré de zone sombre, puisque l'intensité lumineuse engendrée par la ou les sources lumineuses au niveau d'un espace 10 incluant l'objet 5 est inférieure à un seuil d'intensité lumineuse, illustré par le trait en pointillé référencé 6.

La figure 2 illustre la mise en œuvre de la fonction adaptative du faisceau lumineux, notamment par la création d'une zone d'ombre 8 à l'intérieur du faisceau lumineux 1 limitée strictement à l'objet détecté. Cette zone d'ombre 8 est délimitée par un contour 9 formé autour de l'objet 5. Selon l'invention, cette zone d'ombre 8 est créée par extinction d'au moins une des sources lumineuses, lorsque l'intensité lumineuse engendrée par cette source lumineuse au niveau de l'espace 10 incluant l'objet 5 est supérieure au seuil d'intensité lumineuse illustré par le trait en pointillé référencé 6.

Une comparaison des figures 1 et 2 permet immédiatement de comprendre l'avantage procuré par l'invention. En effet et bien que l'objet ait pénétré dans le faisceau lumineux 1, il est considéré que celui-ci n'est pas ébloui. Le confort visuel de l'utilisateur du véhicule 2 peut ainsi être maintenu à son niveau maximum, puisque le faisceau reste homogène sur toute son étendue. En revanche, dès qu'il est considéré que l'objet 5 entre dans le champ lumineux 7 où la ou les sources de lumière génèrent un faisceau qui dépasse le seuil déterminé, une fenêtre d'ombre est créée dans le faisceau en éteignant totalement la ou les sources de lumière qui généraient le faisceau dans l'espace où s'étend l'objet 5.

La création de la zone d'ombre 8 résulte d'une étape du procédé. Cette étape de création est dépendante de l'étape de détection décrite ci-dessus.

La zone d'ombre 8 est ainsi créée par comparaison entre l'intensité lumineuse engendrée par la ou les sources lumineuses au niveau de l'espace 10 incluant l'objet 5 avec le seuil d'intensité lumineuse, autrement appelé seuil d'éblouissement.

Selon l'invention, ce seuil est strictement supérieur zéro. Il est également déterminé en fonction d'une position angulaire de l'objet 5 par rapport à un axe de déplacement du véhicule 2 et/ou du sens de déplacement de l'objet 5 par rapport au véhicule 2 et/ou de sa distance par rapport au véhicule 2. L'invention couvre ainsi l'emploi d'un unique paramètre, mais également toutes combinaisons de ces paramètres. Selon un exemple de l'invention, le seuil d'intensité lumineuse 6 combine au moins les trois paramètres présentés ci-dessus, c'est-à-dire la position angulaire de l'objet 5 par rapport à un axe de déplacement du véhicule 2 combiné avec le sens de déplacement de l'objet 5 par rapport au véhicule 2, combiné à une détermination de la distance qui sépare l'objet 5 du véhicule 2.

Comme illustré sur les figures, le système d'éclairage qui met en œuvre le procédé selon l'invention comporte au moins deux projecteurs avant 4, montés en face avant du véhicule 2. Dans un tel cas, la zone d'ombre 8 peut être déterminée indépendamment pour chacun des projecteurs, ce qui évite l'extinction d'une source lumineuse dont le faisceau est à cheval sur le contour 9 de la zone d'ombre 8. Pour cette détermination de la zone d'ombre par un premier projecteur, il est considéré que le deuxième projecteur est éteint.

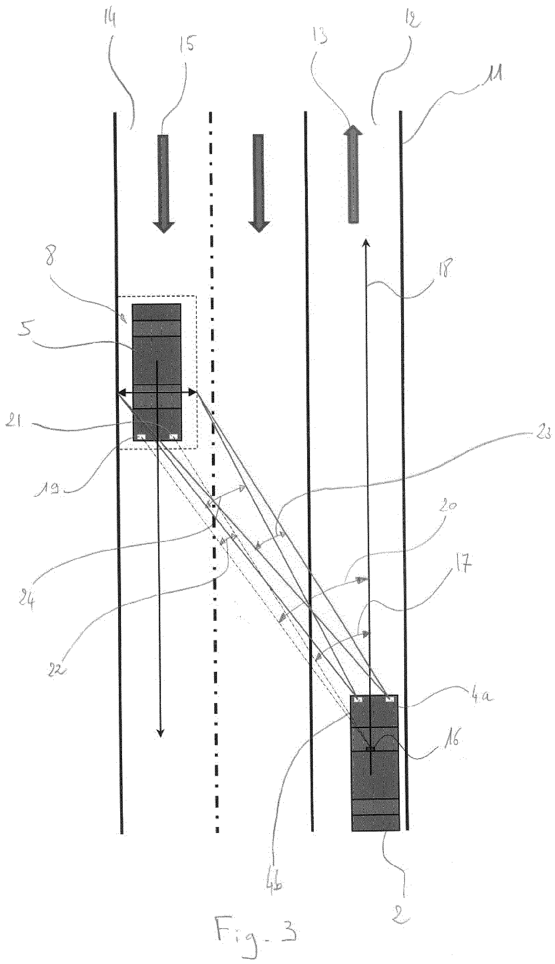

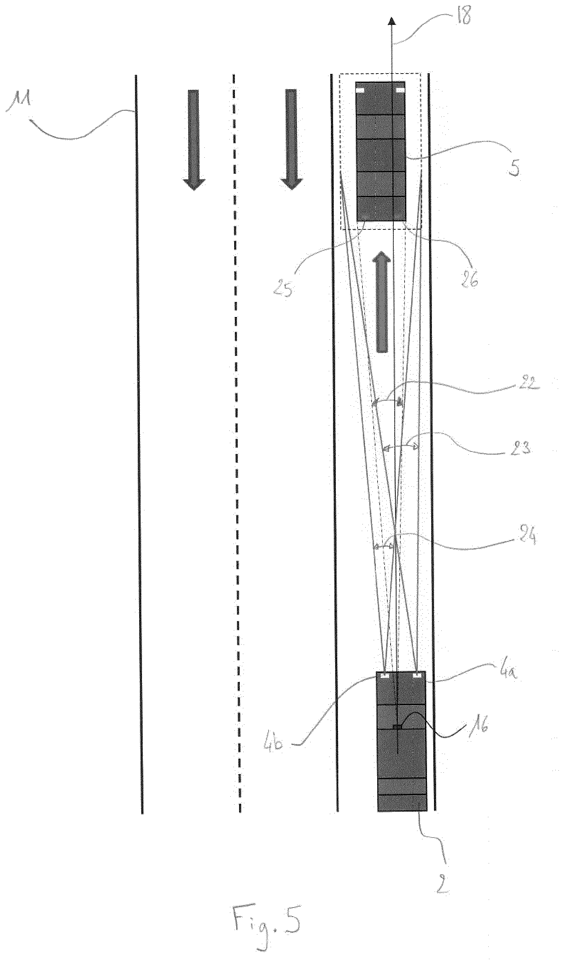

Le seuil d'intensité lumineuse est choisi parmi au moins deux niveaux distincts en fonction de la détermination du sens de déplacement de l'objet par rapport au véhicule. Selon le mode de réalisation des figures 3 ou 5, l'étape de détection détermine que l'objet 5 se déplace en sens inverse du véhicule 2. De manière complémentaire, cette détermination de niveau du seuil d'intensité lumineuse qui commande la création de la zone d'ombre fait usage de la position angulaire de l'objet 5, en le comparant à un ou plusieurs secteurs angulaires prédéterminés.

De manière complémentaire, chaque niveau du seuil d'intensité lumineuse est déterminé en évaluant la distance qui sépare l'objet 5 du véhicule 2, et en comparant cette distance avec une ou plusieurs plages de distances prédéterminées.

Sur la figure 3 est représentée une chaussée 11 comprenant des voies de circulation. Le véhicule 2 qui met en œuvre le procédé selon l'invention circule sur une première voie de circulation 12 selon un premier sens de déplacement 13. Un objet 5, par exemple, un véhicule automobile, un piéton, un cycliste et d'une manière générale tout objet situé sur la chaussée dont on souhaite éviter un éblouissement, circule sur une deuxième voie de circulation 14, selon un deuxième sens de déplacement 15 opposé au premier sens de déplacement 13. En d'autres termes, l'objet 5 et le véhicule 2 se croisent.

L'étape de détection de l'objet 5 est mise en œuvre par un moyen de détection solidaire du véhicule 2. Selon un exemple de réalisation, le moyen de détection prend la forme d'une caméra 16 installée sur le véhicule 2, de manière à observer la chaussée 11 en avant du véhicule 2.

Cette caméra 16 détermine un premier angle de détection 17 qui s'étend entre un axe de déplacement 18 du véhicule 2 et un premier phare 19 de l'objet 5. La caméra 16 détermine également un deuxième angle de détection 20 qui s'étend entre l'axe de déplacement 18 du véhicule 2 et un second phare 21 de l'objet 5. Ce premier angle de détection 17 et ce deuxième angle de détection 20 permettent de calculer un secteur angulaire de détection 22 dans lequel l'objet 5 s'étend.

A partir de ce secteur angulaire de détection 22, par exemple par changement de repère, il est possible de déterminer un premier secteur angulaire 23 dont le sommet est placé sur un projecteur droit 4a du véhicule 2. De même, le procédé détermine à partir du secteur angulaire de détection 22, un deuxième secteur angulaire 24, dont le sommet est centré sur un projecteur gauche 4b du véhicule 2. On comprend ici que le premier secteur angulaire 23 et le deuxième secteur angulaire 24 sont extrapolés à partir du secteur angulaire de détection 22.

Selon une possibilité offerte par l'invention, le premier secteur angulaire 23 et le deuxième secteur angulaire 24 sont augmentés par une marge de sécurité, ce qui se traduit par un angle corrigé passant par un bord externe des deux rétroviseurs extérieurs de l'objet 5. Cet angle corrigé est utilisé pour déterminer l'espace où est placé l'objet, le procédé selon l'invention opérant alors une étape de comparaison pour vérifier si l'intensité lumineuse engendrée par la ou les sources lumineuses orientées vers cet espace dépasse le seuil d'intensité lumineuse déterminé par le fait que l'objet se déplace en sens inverse du véhicule, ainsi que par sa position angulaire vis-à-vis du véhicule.

On comprend de ce qui précède que l'étape de détection détermine d'une part que l'objet 5 se déplace en sens opposé du véhicule 2, et d'autre part la position angulaire de cet objet par rapport au véhicule 2. De manière complémentaire formant un mode de fonctionnement plus sévère, la distance qui sépare l'objet 5 du véhicule 2 peut également être utilisée pour décider de l'extinction de la ou des sources lumineuses, de sorte à créer la zone d'ombre 8.

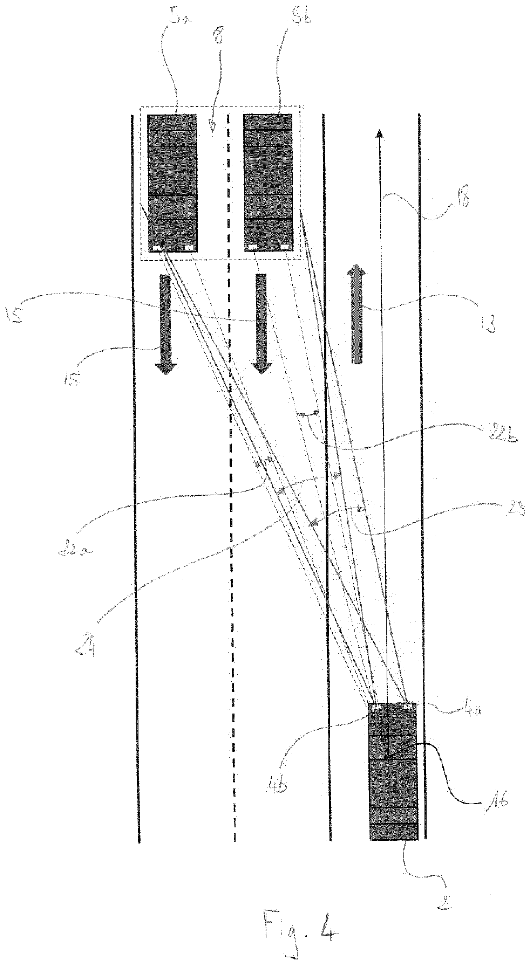

La figure 4 illustre une situation dans laquelle un procédé non conforme à l'invention détecte la présence d'une pluralité d'objets référencés 5a et 5b. Le véhicule 2 se déplace le long de son axe de déplacement 18 selon le premier sens de déplacement 13. Deux véhicules, formant un premier objet 5a et un deuxième objet 5b, se déplacent selon le deuxième sens 15, en sens opposé au sens de déplacement du véhicule 2.

La caméra 16 repère les deux objets 5a et 5b et affecte au premier objet 5a un premier secteur angulaire de détection 22a, et au deuxième objet 5b, un deuxième secteur angulaire de détection 22b, selon le principe détaillé à la figure 3.

A partir de ce premier secteur angulaire de détection 22a et de ce deuxième secteur angulaire de détection 22b, par exemple par changement de repère et ajout d'une marge de sécurité, le procédé détermine le premier secteur angulaire 23 affecté au projecteur droit 4a du véhicule 2, ainsi que le deuxième secteur angulaire 24, dont le sommet est centré sur un projecteur gauche 4b du véhicule 2.

Ce premier secteur angulaire 23 et ce deuxième secteur angulaire 24 permettent de déterminer un unique espace dans lequel s'étendent les deux objets 5a et 5b, puis de vérifier que l'intensité lumineuse engendrée par la ou les sources lumineuses dépassent le seuil déterminé. Dans une telle situation, il est créé une unique zone d'ombre 8 qui couvre les deux objets 5a et 5b, dès lors que ceux-ci sont adjacents l'un à l'autre. Le procédé comprend ainsi une étape de regroupement des objets détectés, de manière à créer une seule zone d'ombre 8 pour au moins deux objets immédiatement adjacents.

La figure 5 montre en vue de dessus la chaussée 11, sur laquelle se déplacent selon un même sens de déplacement 18, d'une part le véhicule 2 qui met en œuvre le procédé selon l'invention, et d'autre part l'objet 5 dont on doit éviter l'éblouissement. Selon ce deuxième mode de réalisation, alternatif ou complémentaire au premier mode de réalisation, le seuil d'intensité lumineuse est choisi parmi au moins deux niveaux lorsqu'il est déterminé que l'objet 5 se déplace dans un même sens de déplacement 18 que le véhicule 2, chaque niveau étant déterminé en comparant au moins la distance séparant l'objet du véhicule à une plage de distances prédéterminée.

La caméra 16 équipant le véhicule 2 repère l'objet 5, par exemple, en détectant la présence d'un premier feu arrière 25 et d'un deuxième feu arrière 26 de l'objet 5. Cette détection permet de déterminer la distance qui sépare l'objet 5 du véhicule 2, lorsqu'ils se déplacent selon un même sens de circulation. Selon un autre exemple de réalisation, la détection des deux feux arrière 25 et 26 permet de former le secteur angulaire de détection 22, à partir duquel le procédé peut déduire la distance qui sépare l'objet 5 du véhicule 2. De manière similaire au mode de réalisation des figures 3 et 4, ce secteur angulaire de détection 22 peut être extrapolé pour déterminer le premier secteur angulaire 23 affecté au premier projecteur 4a du véhicule 2, ainsi que le deuxième secteur angulaire 24 affecté au deuxième projecteur 4b équipant le véhicule 2.

Le procédé permet ainsi de déterminer l'espace dans lequel s'étend l'objet 5, puis de comparer l'intensité lumineuse présente dans cet espace avec le seuil d'intensité lumineuse, ce dernier étant lié au fait que l'objet se déplace dans le même sens que véhicule et fonction de la distance qui le sépare du véhicule 2, la position angulaire de l'objet pouvant compléter la détermination du seuil.

Selon un exemple de l'invention, le procédé opère une étape de sélection entre plusieurs niveaux d'intensités lumineuses, lorsque l'étape de détection détecte une pluralité d'objets se déplaçant en des sens opposés. C'est notamment le cas quand le véhicule 2 détecte la présence, d'une part d'un premier objet en avant du véhicule et circulant dans le même sens de déplacement que le véhicule, et d'autre part d'un deuxième objet circulant en sens inverse du véhicule. Il existe alors deux seuils d'intensité lumineuse, le premier étant lié à l'objet circulant dans le même sens que le véhicule et le deuxième étant lié à l'objet circulant en sens inverse du véhicule. Dans une telle situation, l'étape de sélection impose le seuil d'intensité lumineuse le plus faible des deux. Une zone d'ombre est alors créée dès lors que l'intensité lumineuse engendrée par la ou les sources lumineuses est supérieure au seuil d'intensité le plus faible, qui résulte de cette étape de sélection. On garantit ainsi une absence d'éblouissement des usagers.

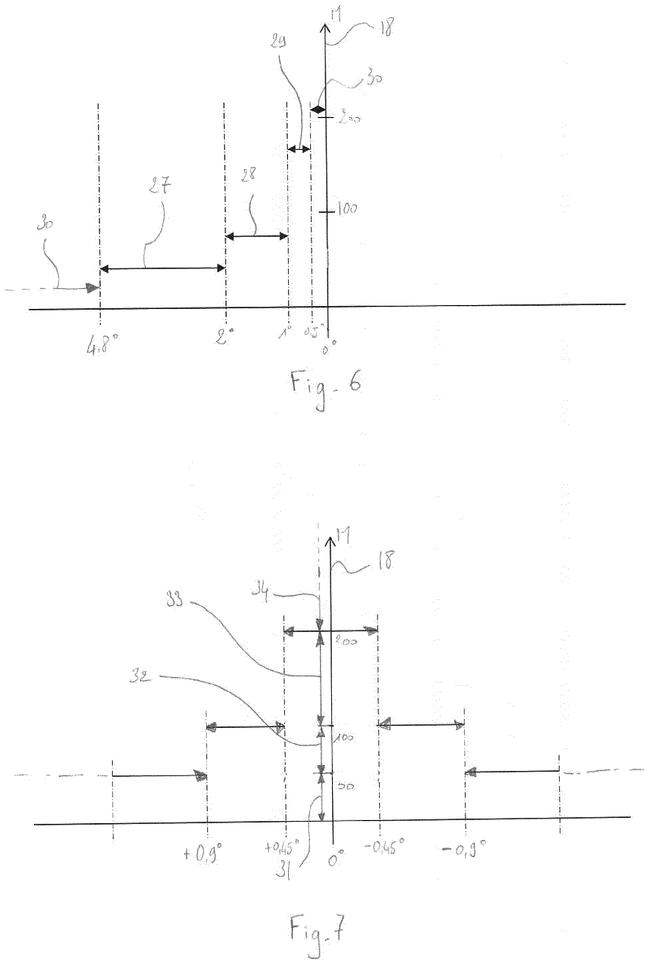

La figure 6 est un graphe applicable au premier mode de réalisation illustré à la figure 3 ou à l'exemple non conforme à l'invention illustré à la figure 4, c'est-à-dire au cas où l'objet se déplace en sens opposé au sens de déplacement du véhicule. L'abscisse de ce graphe montre des plages angulaire qui déterminent des seuils d'intensité lumineuse, alors que l'ordonnée de ce graphe illustre l'axe de déplacement 18 du véhicule et des plages de distances qui séparent l'objet du véhicule.

Selon un exemple d'utilisation du procédé, un premier seuil d'intensité lumineuse est déterminé lorsque la position angulaire de l'objet 5, déterminée par le secteur angulaire de détection détaillé ci-dessus, est comprise dans une première plage angulaire 27. Cette dernière est supérieure ou égale à 2° par rapport à l'axe de déplacement 18 du véhicule. Cette première plage angulaire 27 peut également être bornée par un angle égal à 4,8°, par rapport à l'axe de déplacement 18 du véhicule. Dès lors que le secteur angulaire de détection entre dans cette première plage angulaire 27, le procédé effectue une comparaison entre l'intensité lumineuse engendrée par la ou les sources lumineuses et le premier seuil d'intensité lumineuse. Si le résultat de cette comparaison montre que l'intensité lumineuse engendrée par la ou les sources lumineuses est supérieure au premier seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Le premier seuil d'intensité lumineuse est supérieur à zéro, et choisi parmi l'une quelconque des valeurs comprises entre cette première borne inférieure et un maximum égal à 625 candelas.

Selon un autre exemple de l'invention, une deuxième plage angulaire 28 génère un deuxième seuil d'intensité lumineuse. Cette deuxième plage angulaire s'étend entre un angle égal à 1° et un angle inférieur à 2°, par rapport à l'axe de déplacement 18 du véhicule. Dès lors que le secteur angulaire de détection, qui détermine la position de l'objet, est placé dans cette deuxième plage angulaire 28, le procédé effectue une comparaison entre l'intensité lumineuse engendrée par la ou les sources lumineuses et le deuxième seuil d'intensité lumineuse. Si le résultat de cette comparaison montre que l'intensité lumineuse engendrée par la ou les sources lumineuses est supérieure au deuxième seuil d'intensité lumineuse, le procédé créé une zone d'ombre autour de l'objet par extinction de la ou des sources lumineuses. Dans le cas contraire, le faisceau lumineux est maintenu allumé au moins au droit de l'espace où s'étend l'objet. Le deuxième seuil d'intensité lumineuse est supérieur à 625 candelas et inférieur ou égal à 1750 candelas.

Selon encore un autre exemple mis en œuvre par le procédé selon l'invention, une troisième plage angulaire 29 permet de déterminer un troisième seuil d'intensité lumineuse. Cette troisième plage angulaire 29 est supérieure ou égale à 0,5° et strictement inférieure à 1°, par rapport à l'axe de déplacement 18 du véhicule. Dès lors que le secteur angulaire de détection, qui cible la position de l'objet, est déterminé comme entrant ou étant inclus dans cette troisième plage angulaire 29, le procédé effectue une comparaison entre l'intensité lumineuse engendrée par la ou les sources lumineuses et le troisième seuil d'intensité lumineuse. Si le résultat de cette comparaison montre que l'intensité lumineuse engendrée par la ou les sources lumineuses est supérieure au troisième seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Le troisième seuil d'intensité lumineuse est supérieur à 1750 candelas et inférieur ou égal à 5450 candelas.

Toujours selon un exemple de l'invention, il est créé un quatrième seuil d'intensité lumineuse utilisé lorsque l'objet détecté est présent dans une quatrième plage angulaire 30. Cette dernière est strictement supérieure à 4,8° et/ou strictement inférieure à 0,5°, par rapport à l'axe de déplacement du véhicule. Dès lors que le secteur angulaire de détection, qui cible la position de l'objet, est déterminé comme étant inclus dans ou en intersection avec cette quatrième plage angulaire 30, le procédé effectue une comparaison entre l'intensité lumineuse engendrée par la ou les sources lumineuses et le quatrième seuil d'intensité lumineuse. Si le résultat de cette comparaison montre que l'intensité lumineuse engendrée par la ou les sources lumineuses est supérieure au quatrième seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Le quatrième seuil d'intensité lumineuse est strictement supérieur à 5450 candelas.

Comme expliqué auparavant, le secteur angulaire de détection utilisé dans les quatre exemples ci-dessous est délimité par une paire d'angles, inclinés par rapport à l'axe de déplacement du véhicule. On considérera que le secteur angulaire est compris dans la plage angulaire concernée dès lors qu'au moins l'un des angles de la paire d'angles est compris dans la plage angulaire. En cas de chevauchement de deux plages angulaires, le procédé impose l'utilisation du seuil d'intensité lumineuse le plus faible des deux découlant du chevauchement sur deux plages angulaires.

Les quatre exemples décrits ci-dessus ne font pas appel à une détermination de la distance qui sépare l'objet du véhicule. L'invention couvre néanmoins cette possibilité, la détermination des seuils prenant également en compte la distance qui sépare l'objet du véhicule, notamment en comparant cette distance à une ou plusieurs plages de distances prédéterminées. La prise en compte de cette distance peut influencer les angles bornant les plages angulaires détaillées ci-dessus de la manière suivante :
- première plage angulaire 27 comprise entre 2° et 4,8°, lorsque l'objet est entre 0 et 100 mètres,
- deuxième plage angulaire 28 comprise entre 1° et 2,4°, lorsque l'objet est entre 100 et 200 mètres,
- deuxième plage angulaire 29 comprise entre 0,5° et 1,2°, lorsque l'objet est à une distance supérieure à 100 et 200 mètres, la quatrième plage angulaire restant inchangée.

La figure 7 montre un graphe applicable au deuxième mode d'utilisation illustré à la figure 5, c'est-à-dire au cas où l'objet se déplace dans un même sens que le sens de déplacement du véhicule. L'ordonnée de ce graphe illustre l'axe de déplacement 18 du véhicule et des plages de distances qui séparent l'objet du véhicule et à partir desquels le procédé détermine des seuils d'intensité lumineuse, alors que l'abscisse de ce graphe montre des plages angulaires. Il est bien entendu que le procédé selon l'invention peut combiner le mode d'utilisation décrit en référence aux figures 3, 4 et 6 avec le mode d'utilisation des figures 5 et 7.

Ce deuxième mode d'utilisation peut être mis en œuvre selon au moins trois variantes : une première variante faisant usage seulement d'une unique distance, une deuxième variante faisant usage d'une multiplicité de plages de distances et une troisième variante où les plages de distances sont combinées à des positions angulaires de l'objet par rapport au véhicule.

La première variante, dite binaire, consiste à déterminer un seuil primaire d'intensité lumineuse et un seuil secondaire d'intensité lumineuse en fonction d'une distance fixe et prédéterminée. Selon un exemple, le seuil primaire est utilisé quand l'objet est au-delà de 100 mètres, alors que le seuil secondaire d'intensité lumineuse est applicable pour un véhicule compris entre 0 et 100 mètres. Dès lors que la distance entre l'objet et le véhicule est déterminée comme étant supérieure à 100 mètres, le procédé effectue une comparaison entre l'intensité lumineuse engendrée par la ou les sources lumineuses et le seuil primaire d'intensité lumineuse. Si le résultat de cette comparaison montre que l'intensité lumineuse engendrée par la ou les sources lumineuses est supérieure au premier seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Une même comparaison à l'égard du seuil secondaire d'intensité lumineuse peut également être opérée dès lors qu'il est déterminé que la distance qui sépare l'objet du véhicule est inférieure à 100 mètres. Dans cette variante, le seuil primaire d'intensité lumineuse est supérieur ou égal à 5350 candelas, alors que le seuil secondaire d'intensité lumineuse est strictement supérieur à zéro et inférieur ou égal à 1850 candelas.

Selon la deuxième variante, un cinquième seuil d'intensité lumineuse est déterminé lorsque la distance de l'objet au véhicule est inférieure ou égale à 50 mètres. Il est ainsi créé une cinquième plage 31 de distances comprises entre 0 et 50 mètres. Dès lors que la distance entre l'objet et le véhicule est déterminée comme entrant ou étant inclus dans cette cinquième plage 31, le procédé effectue une comparaison entre l'intensité lumineuse engendrée par la ou les sources lumineuses dans l'espace où s'étend l'objet et le cinquième seuil d'intensité lumineuse. Si le résultat de cette comparaison montre que l'intensité lumineuse engendrée par la ou les sources lumineuses est supérieure au cinquième seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Le cinquième seuil d'intensité lumineuse est strictement supérieur à zéro et inférieur ou égal à 1850 candelas.

Selon la troisième variante évoquée ci-dessus, la détermination du cinquième seuil d'intensité lumineuse peut être affinée en combinant la distance entre l'objet et le véhicule avec la position angulaire de l'objet. Le cinquième seuil d'intensité détaillé ci-dessus peut ainsi être déterminé lorsque la position angulaire de l'objet est supérieure à +0.9 ou -0.9°, mesurée de part et d'autre de l'axe de déplacement 18 du véhicule.

Un sixième seuil d'intensité lumineuse est déterminé lorsque la distance de l'objet au véhicule est strictement supérieure à 50 mètres et inférieure ou égale à 100 mètres. Il est ainsi formé une sixième plage 32 de distances comprise entre 50 et 100 mètres. Dès lors que la distance entre l'objet et le véhicule est déterminée comme entrant ou étant inclus dans cette sixième plage 32, le procédé effectue une comparaison entre l'intensité lumineuse engendrée par la ou les sources lumineuses dans l'espace où s'étend l'objet et le sixième seuil d'intensité lumineuse. Si le résultat de cette comparaison montre que l'intensité lumineuse engendrée par la ou les sources lumineuses est supérieure au sixième seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Le sixième seuil d'intensité lumineuse est strictement supérieur à 1850 candelas et inférieur ou égal à 5300 candelas.

Selon la troisième variante évoquée ci-dessus, la détermination du sixième seuil d'intensité lumineuse peut être affinée en combinant la sixième plage 32 de distances avec la position angulaire de l'objet. Le sixième seuil d'intensité détaillé ci-dessus peut ainsi être déterminé lorsque la position angulaire de l'objet est comprise entre +0.45° et +0.9° ou comprise entre -0.45° et -0.9°, par rapport à l'axe de déplacement 18 du véhicule.

Selon un exemple d'utilisation, un septième seuil d'intensité lumineuse est déterminé lorsque la distance de l'objet au véhicule est strictement supérieure à 100 mètres et inférieure ou égale à 200 mètres. Il est ainsi formé une septième plage 33 de distances comprise entre 100 et 200 mètres. Dès lors que la distance entre l'objet et le véhicule est déterminée comme entrant ou étant inclus dans cette septième plage 33, le procédé effectue une comparaison entre l'intensité lumineuse engendrée par la ou les sources lumineuses dans l'espace où s'étend l'objet et le septième seuil d'intensité lumineuse. Si le résultat de cette comparaison montre que l'intensité lumineuse engendrée par la ou les sources lumineuses est supérieure au septième seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Le septième seuil d'intensité lumineuse est ainsi strictement supérieur à 5300 candelas et inférieur à 16000 candelas.

Selon la troisième variante évoquée ci-dessus, la détermination du septième seuil d'intensité lumineuse peut être affinée en combinant la sixième plage 32 de distances avec la position angulaire de l'objet. Le septième seuil d'intensité détaillé ci-dessus peut ainsi être déterminé lorsque la position angulaire de l'objet est comprise entre +0.45° et -0.45°, par rapport à l'axe de déplacement 18 du véhicule.

Selon un autre exemple d'utilisation, un huitième seuil d'intensité lumineuse est déterminé lorsque la distance de l'objet au véhicule est supérieure ou égale à 200 mètres. Il est ainsi formé une huitième plage 34 de sitances au-delà des 200 mètres. Dès lors que la distance entre l'objet et le véhicule est déterminée comme entrant ou étant inclus dans cette huitième plage 34 de distances, le procédé effectue une comparaison entre l'intensité lumineuse engendrée par la ou les sources lumineuses dans l'espace où s'étend l'objet et le huitième seuil d'intensité lumineuse. Si le résultat de cette comparaison montre que l'intensité lumineuse engendrée par la ou les sources lumineuses est supérieure au huitième seuil d'intensité lumineuse, le procédé créé une zone d'ombre autour de l'objet par extinction de la ou des sources lumineuses concernées. Dans le cas contraire, le faisceau lumineux est maintenu allumé au moins au droit de l'espace où s'étend l'objet. Le huitième seuil d'intensité lumineuse est d'intensité est supérieur ou égal à 16000 candelas.

Selon la troisième variante évoquée ci-dessus, la détermination du septième seuil d'intensité lumineuse peut être affinée en combinant la sixième plage 32 de distances avec la position angulaire de l'objet. Le septième seuil d'intensité détaillé ci-dessus peut ainsi être déterminé lorsque la position angulaire de l'objet est comprise entre +0.45° et -0.45°, par rapport à l'axe de déplacement 18 du véhicule.
La description ci-dessus est relative à un véhicule avec une conduite à gauche. L'invention couvre néanmoins un procédé utilisé pour un véhicule présentant une conduite à droite, les valeurs angulaires étant reportées de manière symétrique par rapport à l'axe de déplacement du véhicule.

## Revendications

1. Procédé de commande d'un système d'éclairage pour véhicule (2) comprenant deux rétroviseurs latéraux, au moins un projecteur droit (4a) et au moins un projecteur gauche (4b) et une pluralité de sources lumineuses génératrices d'un faisceau lumineux (1) montée dans le au moins un projecteur droit (4a) et le au moins un projecteur gauche (4b), le procédé comprenant :
- une étape de détection d'un objet (5) en avant du véhicule (2) à l'aide d'une caméra, l'objet détecté étant une zone de l'espace caractéristique d'un véhicule, cette zone contenant au moins les positions des yeux du conducteur de ce véhicule,
- une étape de création d'une zone d'ombre (8) dans le faisceau lumineux (1) en fonction de la détection opérée lors de l'étape de détection, la zone d'ombre (8) étant créée dans le faisceau lumineux dans un espace (10) incluant strictement l'objet (5) détecté,
le procédé étant **caractérisé par le fait que** la zone de l'espace contient également les positions des rétroviseurs latéraux, et qu'un secteur angulaire de détection (22) dont le sommet est placé sur la caméra (16) et dans lequel l'objet (5) s'étend, est déterminé sur la base d'un premier angle de détection (17) s'étendant entre un axe de déplacement (18) du véhicule (2), l'axe passant par la caméra (16), et un premier phare (19) de l'objet (5) et d'un deuxième angle de détection (20) qui s'étend entre l'axe de déplacement (18) du véhicule (2) et un second phare (21) de l'objet (5), **par le fait qu'**à partir de ce secteur angulaire et sur la base d'un changement de repère, un premier secteur angulaire (23) dont le sommet est placé sur le projecteur droit (4a) est déterminé et un deuxième secteur angulaire (24) dont le sommet est placé sur le projecteur gauche (4b) est déterminé, **par le fait que** le premier secteur angulaire (23) et le deuxième secteur angulaire (24) sont augmentés par une marge de sécurité pour déterminer la position de l'espace (10) incluant l'objet (5), la marge de sécurité se traduisant par un angle corrigé passant par un bord externe des deux rétroviseurs extérieurs de l'objet (5), et **par le fait que** la zone d'ombre (8) est créée par extinction d'au moins une des sources lumineuses lorsque l'intensité lumineuse engendrée par cette source lumineuse au niveau de l'espace (10) incluant l'objet (5) est supérieure à un seuil d'intensité lumineuse, le seuil d'intensité lumineuse étant strictement supérieur à zéro et déterminé en fonction d'une position angulaire de l'objet (5) par rapport à l' axe de déplacement (18) du véhicule, et/ou du sens de déplacement de l'objet (5) par rapport au véhicule (2) et/ou de sa distance par rapport au véhicule (2).

2. Procédé selon la revendication 1, le procédé étant **caractérisé par le fait que** la zone d'ombre (8) est déterminée indépendamment pour chaque projecteur, l'un des projecteurs étant considéré éteint pour la détermination de la zone d'ombre créée par l'autre projecteur.

3. Procédé selon la revendication 1 ou 2, dans lequel le seuil d'intensité lumineuse est déterminé en fonction de la position angulaire de l'objet par rapport à l' axe de déplacement (18) du véhicule, du sens de déplacement de l'objet par rapport au véhicule (2) et de sa distance par rapport au véhicule (2).

4. Procédé selon la revendication 1 ou 2, dans lequel le seuil d'intensité lumineuse est choisi parmi au moins deux seuils distincts en fonction de la détermination du sens de déplacement de l'objet (5) par rapport au véhicule (2).

5. Procédé selon la revendication 4, dans lequel le seuil d'intensité lumineuse est choisi parmi au moins trois seuils distincts lorsqu'il est déterminé que l'objet (5) se déplace en sens inverse du véhicule (2), chaque seuil étant déterminé en comparant au moins la position angulaire de l'objet (5) à une plage angulaire (27, 28, 29, 30) prédéterminée.

6. Procédé selon la revendication précédente, dans lequel chaque seuil est déterminé en comparant la distance qui sépare l'objet (5) du véhicule (2) à une plage de distances prédéterminée.

7. Procédé selon l'une des revendications 5 ou 6, dans lequel un premier seuil d'intensité lumineuse est déterminé lorsque la position angulaire de l'objet (5) est supérieure ou égale à 2° par rapport à un axe de déplacement (18) du véhicule (2), et notamment comprise entre 2° et 4,8° par rapport à l'axe de déplacement (18) du véhicule (2).

8. Procédé selon la revendication 7, dans lequel le premier seuil d'intensité lumineuse est inférieur ou égal à 625 candelas.

9. Procédé selon l'une quelconque des revendications 7 ou 8, dans lequel un deuxième seuil d'intensité lumineuse est déterminé lorsque la position angulaire de l'objet (5) est supérieure ou égale à 1° et strictement inférieure à 2° par rapport à l'axe de déplacement (18) du véhicule (2).

10. Procédé selon la revendication 9, dans lequel le deuxième seuil d'intensité lumineuse est supérieur à 625 candelas et inférieur ou égal à 1750 candelas.

11. Procédé selon l'une quelconque des revendications 7 à 10, dans lequel un troisième seuil d'intensité lumineuse est déterminé lorsque la position angulaire de l'objet (5) est supérieure ou égale à 0,5° et strictement inférieure à 1° par rapport à l'axe de déplacement (18) du véhicule.

12. Procédé selon la revendication 11, dans lequel le troisième seuil d'intensité est supérieur à 1750 candelas et inférieur ou égal à 5450 candelas.

13. Procédé selon l'une quelconque des revendications 7 à 12, dans lequel un quatrième seuil d'intensité lumineuse est déterminé lorsque la position angulaire de l'objet (5) est strictement supérieure à 4,8° ou strictement inférieure à 0,5° par rapport à l'axe de déplacement (18) du véhicule (2).

14. Procédé selon la revendication précédente, dans lequel le quatrième seuil d'intensité est supérieur ou égal à 5450 candelas.

15. Procédé selon la revendication 4, dans lequel le seuil d'intensité lumineuse est choisi parmi au moins deux seuils lorsqu'il est déterminé que l'objet (5) se déplace dans un même sens que le véhicule (2), chaque seuil étant déterminé en comparant au moins la distance séparant l'objet (5) du véhicule (2) à une distance prédéterminée.

16. Procédé selon la revendication 15, dans lequel chaque seuil est déterminé en comparant la position angulaire de l'objet (5) à une plage angulaire prédéterminée (31, 32, 33, 34).

17. Procédé selon la revendication 15 ou 16, dans lequel un cinquième seuil d'intensité lumineuse est déterminé lorsque la distance de l'objet (5) au véhicule (2) est inférieure ou égale à 50 mètres.

18. Procédé selon la revendication 17, dans lequel le cinquième seuil d'intensité est inférieur ou égal à 1850 candelas.

19. Procédé selon l'une quelconque des revendications 17 ou 18, dans lequel un sixième seuil d'intensité lumineuse est déterminé lorsque la distance de l'objet (5) au véhicule (2) est strictement supérieure à 50 mètres et inférieure ou égale à 100 mètres.

20. Procédé selon la revendication 19, dans lequel le sixième seuil d'intensité est strictement supérieur à 1850 candelas et inférieur ou égal à 5300 candelas.

21. Procédé selon l'une quelconque des revendications 17 à 20, dans lequel un septième seuil d'intensité lumineuse est déterminé lorsque la distance de l'objet (5) au véhicule (2) est strictement supérieure à 100 mètres et inférieure ou égale à 200 mètres.

22. Procédé selon la revendication 21, dans lequel le septième seuil d'intensité est strictement supérieur à 5300 candelas et inférieur à 16000 candelas.

23. Procédé selon l'une quelconque des revendications 17 à 22, dans lequel un huitième seuil d'intensité lumineuse est déterminé lorsque la distance de l'objet (5) au véhicule (2) est supérieure à 200 mètres.

24. Procédé selon la revendication 23, dans lequel le huitième seuil d'intensité est supérieur ou égal à 16000 candelas.

25. Procédé selon l'une quelconque des revendications 2 à 24, dans lequel est prévue une étape de sélection d'un seuil d'intensité lumineuse lorsque l'étape de détection détecte au moins deux objets (5, 5a, 5b) caractéristiques d'au moins deux véhicules présentant des sens de déplacement opposés, l'étape de sélection imposant le seuil d'intensité lumineuse le plus faible des seuils d'intensité lumineuse qui dépendent de la pluralité des objets détectés.

## Patentansprüche

1. Verfahren zur Steuerung eines Beleuchtungssystems für ein Fahrzeug (2), das zwei seitliche Rückspiegel, mindestens einen rechten Scheinwerfer (4a) und mindestens einen linken Scheinwerfer (4b) und eine Vielzahl von ein Lichtbündel (1) erzeugenden Lichtquellen enthält, die in den mindestens einen rechten Scheinwerfer (4a) und den mindestens einen linken Scheinwerfer (4b) montiert ist, wobei das Verfahren enthält:
- einen Schritt der Erfassung eines Objekts (5) vor dem Fahrzeug (2) mit Hilfe einer Kamera, wobei das erfasste Objekt eine Zone des charakteristischen Raums eines Fahrzeugs ist, wobei diese Zone mindestens die Stellungen der Augen des Fahrers dieses Fahrzeugs enthält,
- einen Schritt der Erzeugung einer Schattenzone (8) im Lichtbündel (1) abhängig von der im Erfassungsschritt durchgeführten Erfassung, wobei die Schattenzone (8) im Lichtbündel in einem Raum (10) erzeugt wird, der strikt das erfasste Objekt (5) einschließt,
wobei das Verfahren **dadurch gekennzeichnet ist, dass** die Zone des Raums ebenfalls die Stellungen der seitlichen Rückspiegel enthält, und dass ein Erfassungswinkelsektor (22), dessen Scheitel auf der Kamera (16) angeordnet ist und in dem das Objekt (5) sich erstreckt, auf der Basis eines ersten Erfassungswinkels (17), der sich zwischen einer Bewegungsachse (18) des Fahrzeugs (2), wobei die Achse durch die Kamera (16) verläuft, und einem ersten Scheinwerfer (19) des Objekts (5) erstreckt, und eines zweiten Erfassungswinkels (20) bestimmt wird, der sich zwischen der Bewegungsachse (18) des Fahrzeugs (2) und einem zweiten Scheinwerfer (21) des Objekts (5) erstreckt, dadurch, dass ausgehend von diesem Winkelsektor und auf der Basis einer Bezugspunktänderung ein erster Winkelsektor (23), dessen Scheitel auf dem rechten Scheinwerfer (4a) angeordnet ist, bestimmt wird, und ein zweiter Winkelsektor (24), dessen Scheitel auf dem linken Scheinwerfer (4b) angeordnet ist, bestimmt wird, dadurch, dass der erste Winkelsektor (23) und der zweite Winkelsektor (24) um eine Sicherheitsmarge erhöht werden, um die Stellung des das Objekt (5) einschließenden Raums (10) zu bestimmen, wobei die Sicherheitsmarge sich durch einen korrigierten Winkel ausdrückt, der durch einen Außenrand der zwei äußeren Rückspiegel des Objekts (5) verläuft, und dadurch, dass die Schattenzone (8) durch Ausschalten mindestens einer der Lichtquellen erzeugt wird, wenn die von dieser Lichtquelle im Bereich des das Objekt (5) einschließenden Raums (10) erzeugte Lichtstärke über einer Lichtstärkenschwelle liegt, wobei die Lichtstärkenschwelle strikt größer als Null ist und abhängig von einer Winkelstellung des Objekts (5) bezüglich der Bewegungsachse (18) des Fahrzeugs und/oder der Bewegungsrichtung des Objekts (5) bezüglich des Fahrzeugs (2) und/oder seinem Abstand bezüglich des Fahrzeugs (2) bestimmt wird.

2. Verfahren nach Anspruch 1, wobei das Verfahren **dadurch gekennzeichnet ist, dass** die Schattenzone (8) für jeden Scheinwerfer unabhängig bestimmt wird, wobei einer der Scheinwerfer für die Bestimmung der vom anderen Scheinwerfer erzeugten Schattenzone als ausgeschaltet angenommen wird.

3. Verfahren nach Anspruch 1 oder 2, wobei die Lichtstärkenschwelle abhängig von der Winkelstellung des Objekts bezüglich der Bewegungsachse (18) des Fahrzeugs, der Bewegungsrichtung des Objekts bezüglich des Fahrzeugs (2) und seinem Abstand bezüglich des Fahrzeugs (2) bestimmt wird.

4. Verfahren nach Anspruch 1 oder 2, wobei die Lichtstärkenschwelle abhängig von der Bestimmung der Bewegungsrichtung des Objekts (5) bezüglich des Fahrzeugs (2) unter mindestens zwei unterschiedlichen Schwellen ausgewählt wird.

5. Verfahren nach Anspruch 4, wobei die Lichtstärkenschwelle unter mindestens drei unterschiedlichen Schwellen ausgewählt wird, wenn bestimmt wird, dass das Objekt (5) sich in Gegenrichtung zum Fahrzeug (2) bewegt, wobei jede Schwelle durch Vergleich mindestens der Winkelstellung des Objekts (5) mit einem vorbestimmten Winkelbereich (27, 28, 29, 30) bestimmt wird.

6. Verfahren nach dem vorhergehenden Anspruch, wobei jede Schwelle durch Vergleich des das Objekt (5) vom Fahrzeug (2) trennenden Abstands mit einem vorbestimmten Bereich von Abständen bestimmt wird.

7. Verfahren nach einem der Ansprüche 5 oder 6, wobei eine erste Lichtstärkenschwelle bestimmt wird, wenn die Winkelstellung des Objekts (5) größer als oder gleich 2° bezüglich einer Bewegungsachse (18) des Fahrzeugs (2) ist, und insbesondere zwischen 2° und 4,8° bezüglich der Bewegungsachse (18) des Fahrzeugs (2) liegt.

8. Verfahren nach Anspruch 7, wobei die erste Lichtstärkenschwelle niedriger als oder gleich 625 Candela ist.

9. Verfahren nach einem der Ansprüche 7 oder 8, wobei eine zweite Lichtstärkenschwelle bestimmt wird, wenn die Winkelstellung des Objekts (5) größer als oder gleich 1° und strikt kleiner als 2° bezüglich der Bewegungsachse (18) des Fahrzeugs (2) ist.

10. Verfahren nach Anspruch 9, wobei die zweite Lichtstärkenschwelle höher als 625 Candela und niedriger als oder gleich 1750 Candela ist.

11. Verfahren nach einem der Ansprüche 7 bis 10, wobei eine dritte Lichtstärkenschwelle bestimmt wird, wenn die Winkelstellung des Objekts (5) größer als oder gleich 0,5° und strikt kleiner als 1° bezüglich der Bewegungsachse (18) des Fahrzeugs ist.

12. Verfahren nach Anspruch 11, wobei die dritte Stärkenschwelle höher als 1750 Candela und niedriger als oder gleich 5450 Candela ist.

13. Verfahren nach einem der Ansprüche 7 bis 12, wobei eine vierte Lichtstärkenschwelle bestimmt wird, wenn die Winkelstellung des Objekts (5) strikt größer als 4,8° oder strikt kleiner als 0,5° bezüglich der Bewegungsachse (18) des Fahrzeugs (2) ist.

14. Verfahren nach dem vorhergehenden Anspruch, wobei die vierte Stärkenschwelle höher als oder gleich 5450 Candela ist.

15. Verfahren nach Anspruch 4, wobei die Lichtstärkenschwelle unter mindestens zwei Schwellen ausgewählt wird, wenn bestimmt wird, dass das Objekt (5) sich in der gleichen Richtung wie das Fahrzeug (2) bewegt, wobei jede Schwelle durch Vergleich mindestens des das Objekt (5) vom Fahrzeug (2) trennenden Abstands mit einem vorbestimmten Abstand bestimmt wird.

16. Verfahren nach Anspruch 15, wobei jede Schwelle durch Vergleich der Winkelstellung des Objekts (5) mit einem vorbestimmten Winkelbereich (31, 32, 33, 34) bestimmt wird.

17. Verfahren nach Anspruch 15 oder 16, wobei eine fünfte Lichtstärkenschwelle bestimmt wird, wenn der Abstand des Objekts (5) zum Fahrzeug (2) kleiner als oder gleich 50 Meter ist.

18. Verfahren nach Anspruch 17, wobei die fünfte Stärkenschwelle niedriger als oder gleich 1850 Candela ist.

19. Verfahren nach einem der Ansprüche 17 oder 18, wobei eine sechste Lichtstärkenschwelle bestimmt wird, wenn der Abstand des Objekts (5) zum Fahrzeug (2) strikt größer als 50 Meter und kleiner als oder gleich 100 Meter ist.

20. Verfahren nach Anspruch 19, wobei die sechste Stärkenschwelle strikt höher als 1850 Candela und niedriger als oder gleich 5300 Candela ist.

21. Verfahren nach einem der Ansprüche 17 bis 20, wobei eine siebte Lichtstärkenschwelle bestimmt wird, wenn der Abstand des Objekts (5) zum Fahrzeug (2) strikt größer als 100 Meter und kleiner als oder gleich 200 Meter ist.

22. Verfahren nach Anspruch 21, wobei die siebte Stärkenschwelle strikt höher als 5300 Candela und niedriger als 16000 Candela ist.

23. Verfahren nach einem der Ansprüche 17 à 22, wobei eine achte Lichtstärkenschwelle bestimmt wird, wenn der Abstand des Objekts (5) zum Fahrzeug (2) größer als 200 Meter ist.

24. Verfahren nach Anspruch 23, wobei die achte Stärkenschwelle höher als oder gleich 16000 Candela ist.

25. Verfahren nach einem der Ansprüche 2 bis 24, wobei ein Schritt der Auswahl einer Lichtstärkenschwelle vorgesehen ist, wenn der Erfassungsschritt mindestens zwei charakteristische Objekte (5, 5a, 5b) von mindestens zwei Fahrzeugen erfasst, die entgegengesetzte Bewegungsrichtungen haben, wobei der Auswahlschritt die niedrigste Lichtstärkenschwelle der Lichtstärkenschwellen vorschreibt, die von der Vielzahl der erfassten Objekte abhängen.

## Claims

1. Method for controlling a lighting system for a vehicle (2), comprising two side mirrors, at least one right-hand headlamp (4a) and at least one left-hand headlamp (4b) and a plurality of light sources generating a light beam (1) that are mounted in the at least one right-hand headlamp (4a) and the at least one left-hand headlamp (4b), the method comprising:
- a step of detecting an object (5) in front of the vehicle (2) with the aid of a camera, the object detected being a spatial zone characteristic of a vehicle, this zone containing at least the positions of the eyes of the drive of this vehicle,
- a step of creating a shadow zone (8) in the light beam (1) depending on the detection carried out during the detection step, the shadow zone (8) being created in the light beam in a space (10) that strictly includes the object (5) detected,
the method being **characterized in that** the spatial zone also contains the positions of the side mirrors, and that an angular detector sector (22) of which the apex is located on the camera (16) and in which the object (5) extends is determined on the basis of a first detection angle (17) extending between an axis of movement (18) of the vehicle (2), the axis passing through the camera (16), and a first headlight (19) of the object (5) and on the basis of a second detection angle (20) which extends between the axis of movement (18) of the vehicle (2) and a second headlight (21) of the object (5), **in that**, from this angular sector and on the basis of a change in reference, a first angular sector (23) of which the apex is located on the right-hand headlamp (4a) is determined and a second angular sector (24) of which the apex is located on the left-hand headlamp (4b) is determined, **in that** the first angular sector (23) and the second angular sector (24) are increased by a safety margin in order to determine the spatial position (10) including the object (5), the safety margin being reflected by a corrected angle passing through an external edge of the two exterior mirrors of the object (5), and **in that** the shadow zone (8) is created by extinction of at least one of the light sources when the light intensity generated by this light source in the space (10) including the object (5) is greater than a light intensity threshold, the light intensity threshold being strictly greater than zero and determined depending on an angular position of the object (5) with respect to the axis of movement (18) of the vehicle and/or on the direction of movement of the object (5) with respect to the vehicle (2) and/or on its distance with respect to the vehicle (2).

2. Method according to Claim 1, the method being **characterized in that** the shadow zone (8) is determined independently for each headlamp, one of the headlamps being considered to be extinguished for the determination of the shadow zone created by the other headlamp.

3. Method according to Claim 1 or 2, wherein the light intensity threshold is determined depending on the angular position of the object with respect to the axis of movement (18) of the vehicle, on the direction of movement of the object with respect to the vehicle (2) and on its distance with respect to the vehicle (2).

4. Method according to Claim 1 or 2, wherein the light intensity threshold is chosen from at least two different thresholds depending on the determination of the direction of movement of the object (5) with respect to the vehicle (2).

5. Method according to Claim 4, wherein the light intensity threshold is chosen from at least three different thresholds when the object (5) is determined to be moving in the opposite direction to the vehicle (2), each threshold being determined by comparing at least the angular position of the object (5) with a predetermined angular range (27, 28, 29, 30).

6. Method according to the preceding claim, wherein each threshold is determined by comparing the distance separating the object (5) from the vehicle (2) with a predetermined range of distances.

7. Method according to Claim 5 or 6, wherein a first light intensity threshold is determined when the angular position of the object (5) is greater than or equal to 2° with respect to an axis of movement (18) of the vehicle (2), and in particular is between 2° and 4.8° with respect to the axis of movement (18) of the vehicle (2).

8. Method according to Claim 7, wherein the first light intensity threshold is less than or equal to 625 candelas.

9. Method according to either one of Claims 7 and 8, wherein a second light intensity threshold is determined when the angular position of the object (5) is greater than or equal to 1° and strictly less than 2° with respect to the axis of movement (18) of the vehicle (2).

10. Method according to Claim 9, wherein the second light intensity threshold is greater than 625 candelas and less than or equal to 1750 candelas.

11. Method according to any one of Claims 7 to 10, wherein a third light intensity threshold is determined when the angular position of the object (5) is greater than or equal to 0.5° and strictly less than 1° with respect to the axis of movement (18) of the vehicle.

12. Method according to Claim 11, wherein the third intensity threshold is greater than 1750 candelas and less than or equal to 5450 candelas.

13. Method according to any one of Claims 7 to 12, wherein a fourth light intensity threshold is determined when the angular position of the object (5) is strictly greater than 4.8° or strictly less than 0.5° with respect to the axis of movement (18) of the vehicle (2).

14. Method according to the preceding claim, wherein the fourth intensity threshold is greater than or equal to 5450 candelas.

15. Method according to Claim 4, wherein the light intensity threshold is chosen from at least two thresholds when the object (5) is determined to be moving in the same direction as the vehicle (2), each threshold being determined by comparing at least the distance separating the object (5) from the vehicle (2) with a predetermined distance.

16. Method according to Claim 15, wherein each threshold is determined by comparing the angular position of the object (5) with a predetermined angular range (31, 32, 33, 34) .

17. Method according to Claim 15 or 16, wherein a fifth light intensity threshold is determined when the distance of the object (5) from the vehicle (2) is less than or equal to 50 metres.

18. Method according to Claim 17, wherein the fifth intensity threshold is less than or equal to 1850 candelas.

19. Method according to either one of Claims 17 and 18, wherein a sixth light intensity threshold is determined when the distance of the object (5) from the vehicle (2) is strictly greater than 50 metres and less than or equal to 100 metres.

20. Method according to Claim 19, wherein the sixth intensity threshold is strictly greater than 1850 candelas and less than or equal to 5300 candelas.

21. Method according to any one of Claims 17 to 20, wherein a seventh light intensity threshold is determined when the distance of the object (5) from the vehicle (2) is strictly greater than 100 metres and less than or equal to 200 metres.

22. Method according to Claim 21, wherein the seventh intensity threshold is strictly greater than 5300 candelas and less than 16 000 candelas.

23. Method according to any one of Claims 17 to 22, wherein an eighth light intensity threshold is determined when the distance of the object (5) from the vehicle (2) is greater than 200 metres.

24. Method according to Claim 23, wherein the eighth intensity threshold is greater than or equal to 16 000 candelas.

25. Method according to any one of Claims 2 to 24, wherein a step of selecting a light intensity threshold when the detection step detects at least two objects (5, 5a, 5b) characteristic of at least two vehicles with opposite directions of movement is provided, the selection step imposing the weakest light intensity threshold of the light intensity thresholds which depend on the plurality of objects detected.
